# EUROPEAN PATENT SPECIFICATION

(11) **EP 1 624 944 B1**
(45) Date of publication and mention of the grant of the patent: **28.02.2007**
(21) Application number: 04751302.3
(22) Date of filing: 03.05.2004
(51) Int. Cl.: A63F 13/12

(54) **VIDEO GAME METHOD AND SYSTEM WITH CONTENT-RELATED OPTIONS**
VIDEOSPIELVERFAHREN UND SYSTEM MIT INHALTSBEZOGENEN OPTIONEN
PROCEDE ET SYSTEME DE JEU VIDEO COMPRENANT DES OPTIONS CONCERNANT LE CONTENU

(30) Priority: 20.05.2003 US 442428
(43) Date of publication of application: 15.02.2006
(73) Proprietor: Sony Computer Entertainment America, Inc., Foster City, CA 94404 (US)
(72) Inventor: CHATANI, Masayuki, Foster City, CA 94404 (US)
(74) Representative: DeVile, Jonathan Mark
(86) International application number: PCT/US2004/013854
(87) International publication number: WO 2004/103503

(56) References cited:
- EP-A- 0 814 419
- EP-A- 0 833 513
- EP-A- 1 004 970
- WO-A-00/63916
- WO-A-01/40948
- WO-A-01/91869
- US-A- 5 696 905
- US-A- 5 987 525
- US-A1- 2002 086 734
- US-A1- 2002 188 940
- PERRY T S: "CONSUMER ELECTRONICS" IEEE SPECTRUM, IEEE INC. NEW YORK, US, vol. 34, no. 1, 1997, pages 43-48, XP000691707 ISSN: 0018-9235

## Description

### BACKGROUND OF THE INVENTION

### 1. Field of the Invention

This invention relates generally to interactive content with content-related options, and more particularly to methods and systems for providing options to obtain and locally store additional digital content that is at least partially related to the content of a video game.

### 2. Description of the Related Art

Currently, interactive content systems, such as video game consoles, provide utility and entertainment mechanisms to individuals worldwide. For example, interactive content of such systems allow users to view digital video discs (DVDs), play interactive entertainment software such as games, browse the Internet, and play on-line video games.

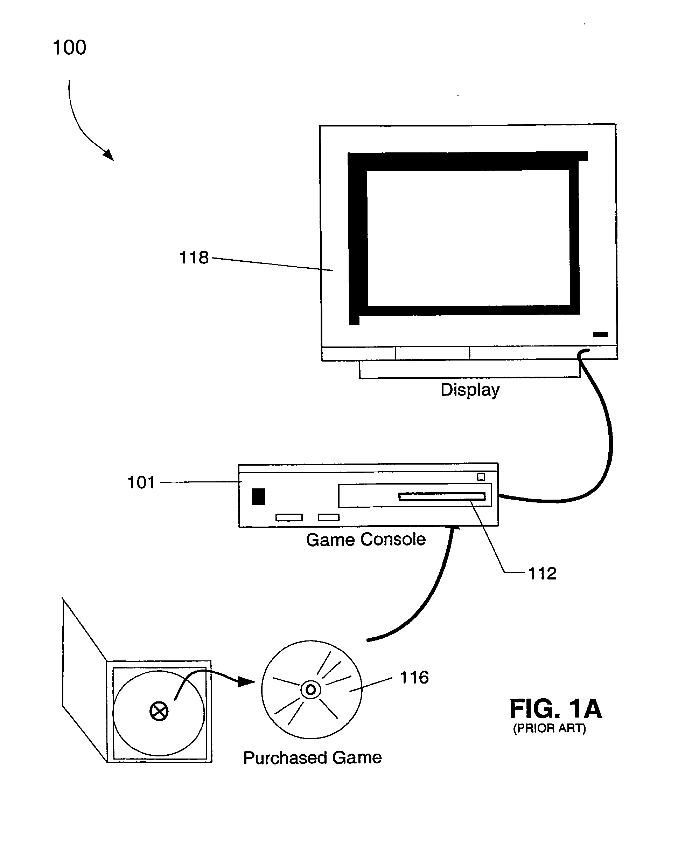

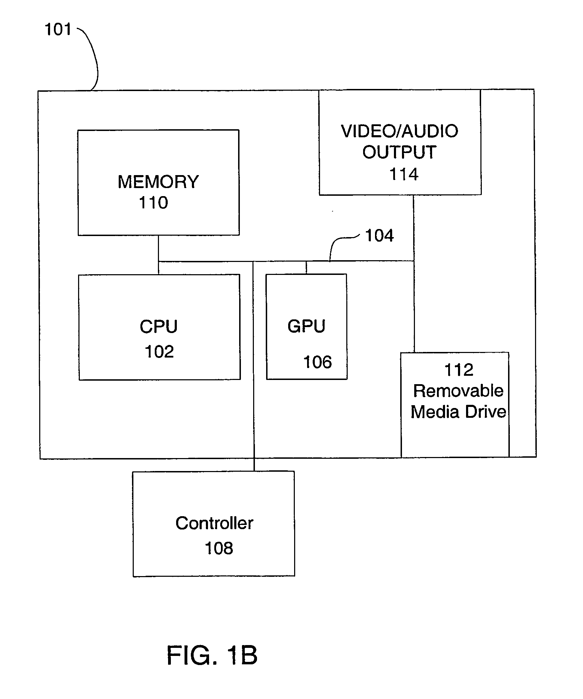

Figures 1A and 1B are diagrams showing a typical interactive content system 100, such as for playing a video game. Figure 1A shows the prior art interactive content system 100 generally including a game console 101. An exemplary game console may be Sony's Playstation or Playstation2 system. Figure 1B shows a simplified game console 101 having at least a central processing unit (CPU) 102 coupled to a system bus 104, which connects a plurality of system components. For example, the system bus 104 often is connected to a graphics processing unit (GPU) 106, a controller 108, a memory 110, a removable-media drive 112, and video/audio output circuitry 114.

In operation, removable media such as a compact disc (CD) 116 (Figure 1A) is placed into the removable-media drive 112, which reads data from the disc 116 and transfers program information to the memory 110. The CPU 102, in conjunction with the GPU 106, executes program instructions from the memory 110 to execute the program. In addition, the controller 108 serves as a user input device, such as a game controller, remote controller, keyboard, or other device capable of receiving and transferring user input data to the interactive content system 100. Output from the program executing on the CPU 102 generally is provided to the video/audio output circuitry 114 for presentation, typically on television or other monitor and speaker system 118.

In this manner, users are able to interact with the information presented to them via the controller 108 the screen (not shown) and the discs 116. This information may concern the subject of a video game to be played interactively, and may be in the form of digital data and instructions. However, as can be appreciated, the user is limited to interacting with the information provided from the removable media disc 116 via the removable-media drive 112. For example, if a user purchases a football game, the removable media CD only provides content for the purchased football game. If a user wants to play another game, the user needs to purchase another game CD and then insert it into the game console 101. Consequently, producers and manufacturers of game CD are required to separately package each game, individually ship each game to stores, and separately sell such game CDs.

Recently, however, the storage capability of CDs, such as DVDs, has increased substantially. Many times, the game content stored on an individual CD only takes up a fraction of the available space on the CD. Consequently, the CD containing a particular game is sold with a great deal of unused and wasted bandwidth. Although the cost of physical CDs, in a blank and unused state, has gone down in recent years, the overhead for packaging each CD, transporting CDs to stores, and displaying CDs on store shelves has gone up significantly as the cost of doing business continues to increase.

In view of the foregoing, there is a need for an interactive content system and method that can provide content-related options to purchasers of game CDs.

WO 01/91869 discloses a system in which a video game is provided with advertising such that when a player mouse clicks on an image element in the course of play of the game, the game play may be automatically paused. Once the game play is paused, an advertising graphical user interface may be displayed that enables the user to purchase items associated with image elements observed in the course of game play.

EP-A-1004970 discloses a method for downloading data to gaming devices. Memories coupled to a gaming terminal may be reprogrammed by a method and apparatus which includes identification, negotiation, and downloading verification information from an external information source to a gaming terminal.

### SUMMARY OF THE INVENTION

The invention is defined in the appended claims.

Broadly speaking, the present invention fills these needs by providing a computer driven method that enables purchasers of video games to interactively obtain additional related digital content. The method and system render the content-related options easily available to the user. The method and system provide access to the content-related options from sources such as the Internet (i.e., web sites or servers), and enable easy use of the content-related options in conjunction with interactive applications.

In one embodiment, a method for providing media content-related options in conjunction with video game use is provided. The method includes identifying video game content of a video game and identifying commercial media content that is related to the video game content. The method further includes displaying an interactive menu through a screen of the video game. The interactive menu itemizes selectable commercial media content and provides a link to a commercial Internet website to enable purchase of the commercial media content.

In another embodiment, a method for presenting additional digital content options to video game players of a video game is disclosed. The method includes receiving digital data for a main video game and displaying options for additional digital content. The additional digital content is related to the main video game. The method further includes detecting a selection of at least one of the options for additional digital content and obtaining the selected additional digital content over a network. The method then enables storing the selected additional digital content to local storage.

In still another embodiment, a method for presenting additional digital content options to video game players of a video game is disclosed. The method includes receiving digital data for a main video game and displaying options for additional digital content. The additional digital content being related to the main video game and being locally stored in a locked state. The method further includes detecting a selection of at least one of the options for additional digital content and obtaining a key for the selected additional content. The key operating to unlock the selected additional content.

In another embodiment, a computer video game product is provided. The product includes a computer-readable medium having computer-readable instructions and data recorded thereon for enabling a processor of a computer system to provide commercial media content-related options in conjunction with use of a video game. The instructions and data define video game content readable by the processor to enable playing of the video game through one or more screens. The instructions and data further include identification of commercial media content that is related to the video game content, and instructions for displaying an interactive menu through a screen of the video game. The interactive menu itemizes selectable commercial media content to be read by the processor.

In yet another embodiment, a system for providing commercial media content-related options in conjunction with video game use is disclosed. The system includes a computer-readable medium having recorded thereon computer-readable video game content instructions and data and code identifying the commercial media content that is related to the video game content. The system further includes a video game computer console capable of reading the instructions and data. The video game computer console is configured to display an interactive menu through a screen of the video game. The interactive menu is based on the code of the commercial media content, and the interactive menu itemizes selectable commercial media content to be displayed by the computer console.

In one - embodiment, the obtained additional content related options can be locally stored onto free bandwidth of a game CD or can be stored to other local media. In another - embodiment, the user is provided with options for additional digital content, and the digital content is at least partially related to the digital content of the purchased game CD. For instance, if the game CD is a car racing game, the user may be provided with options to obtain additional racing-type games. The options, however, are not limited to additional games, but can include any digital content. Such digital content can include, for example, music, videos, screen savers, theme songs, mini-games, etc. So long as the digital content can be saved in digital form, that digital content can be presented as an option to the user of the video game.

Other aspects and advantages of the invention will become apparent from the following detailed description, taken in conjunction with the accompanying drawings, illustrating by way of example the principles of the invention.

### BRIEF DESCRIPTION OF THE DRAWINGS

The invention, together with further advantages thereof, may best be understood by reference to the following description taken in conjunction with the accompanying drawings in which:

Figure 1A is a schematic diagram showing a typical interactive content system;

Figure 1B is a block diagram of basic circuit components of a game console;

Figure 2A is a plan view showing a blank disc for receiving digital content;

Figure 2B is a plan view showing an embodiment of the invention, where additional code is stored on compact disc to enable presentation or access to additional content that may be related to the main video game;

Figure 2C shows the storage of a second game onto extra previously unused space of the compact disc;

Figure 3 illustrates an example where additional content that was previously stored on the compact disc (in addition to the main video game) is decrypted using a downloaded key;

Figures 4-6 illustrate systems that enable the utilization of compact disc storage or peripheral storage to obtain and store additional digital content that may be related to a main game;

Figure 7A is a view showing a first, or exemplary, screen of the computer video game, illustrating an option to access content-related options;

Figure 7B illustrates an exemplary screen that will enable a user to access digital content options that relate to a main video game;

Figures 8A and 8B illustrate flow charts operations that enable users to obtain keys for decrypting related digital content stored on the compact disc (or some other local storage);

Figure 9 is a flow chart illustrating an embodiment where related digital content is identified, purchased, downloaded and stored in local storage.

### DETAILED DESCRIPTION OF THE PREFERRED EMBODIMENTS

An invention is disclosed for a computer driven method that enables purchasers of video games to obtain additional related digital content. The digital content can be obtained from the Internet and stored onto the same media that the purchased video game resides or can be stored onto other local storage. In one embodiment, the additional digital content, which is related by some link to the purchased video game, will preferably already be stored on the media holding the purchased video game. In such an embodiment, the additional digital content only needs to be activated. Activation of the additional digital media can be by way of a digital key that can be purchased over the Internet, for example. Still further, in one embodiment, compact discs may be distributed for free (e.g., in magazines or some other channel) and the user desiring to activate the content stored on the compact disc can simply perform a e-commerce transaction to obtain a key (e.g., over the Internet). In one embodiment, the method and system will render the content-related options easily available to the user of the interactive content system (e.g., game console) by using graphical user displays and selection menus.

Broadly speaking, embodiments of the present invention may include an interactive

content product, such as an exemplary computer program video game product. The product may be in the form of a computer-readable medium having computer-readable instructions and data recorded thereon for enabling a processor of a computer system to play video games and provide the user with content related options. The instructions and data preferably include instructions for displaying an interactive menu through a screen of the video game, the interactive menu itemizing selectable media content-related options. These options can either be to augment the content of the purchased video game, or can be selections of other related media content, such as another game, a mini game, a video, a song or songs, a screen saver, etc. The options can be initially stored on the media, or can be obtained from the internet in real-time. If obtained from the Internet in real-time, the user will be provided with a more current list of related digital content.

In the following description, numerous specific details are set forth in order to provide a thorough understanding of the present invention. It will be apparent, however, to one skilled in the art that the present invention may be practiced without some or all of these specific details. In other instances, well known process steps have not been described in detail in order not to obscure the present invention.

Further, in a general sense, the term "game content" or "video game content" will be utilized in the following description to generally indicate any data usable in an interactive application, wherein subject matter of the interactive application has a distinctive characteristic. For example, the interactive application may be a computer video game related to a sport, such as baseball, football, basketball, or the like. One of many sport-related distinctive characteristics of such interactive application may, for example, be the type of sport (e.g., baseball); or who is playing the sport (women, men or children); or whether the sport is amateur or professional (e.g., WNBA, NFL, NHL, etc.). The video game data and instructions are also generally in digital form and may be stored on a computer-readable medium, such as a CD, CDR, CD-RW, DVD, hard drive, Internet storage, floppy disc, memory stick, or other magnetic or optical data storage device.

Also, the term "content-related option" will be utilized in the following description to generally indicate any data usable with or at least partially related to the game content, of such interactive application. Also, the "option" aspect of such term indicates the ready availability of the data and instructions at the selection, or "option", of the user of the interactive application, i.e., at the option of the person interacting with the computer video game. As another example, if a video game related race cars, related content may be, for example, mini-games for motorcycle racing, speedboat racing, video clips of past actual races, music from the race car video game, etc.

As another example, in a general sense, "content-related option" may be a movie that has the same distinctive characteristic as the interactive application. In the context of an interactive application in the form of a computer video game related to a well-known character, such as Bat Man, for example, the movie may be a list of "Bat Man Movies." The option can also be a super hero mini-game, or songs from the movie or game, etc.

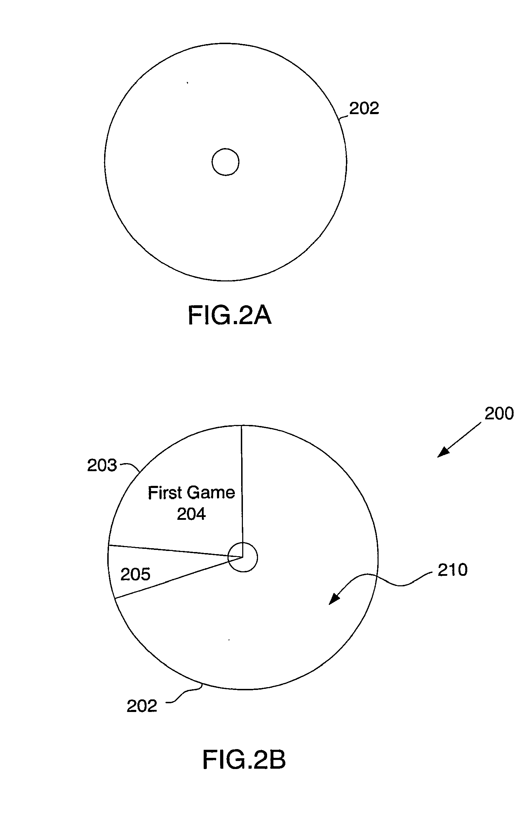

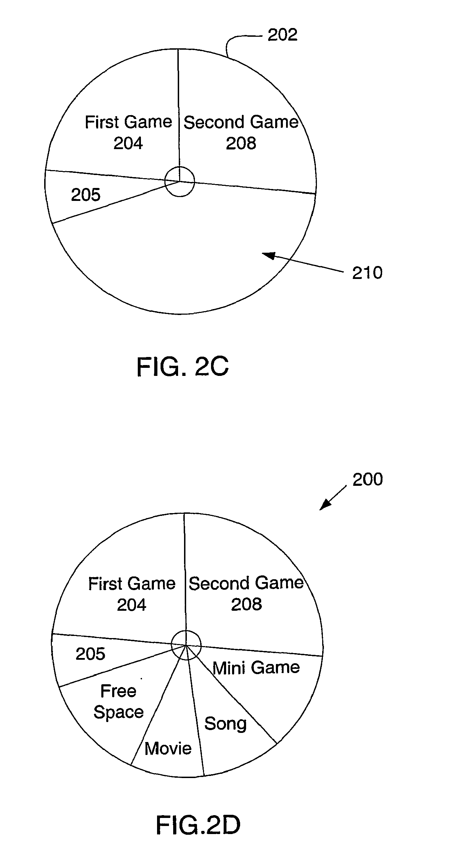

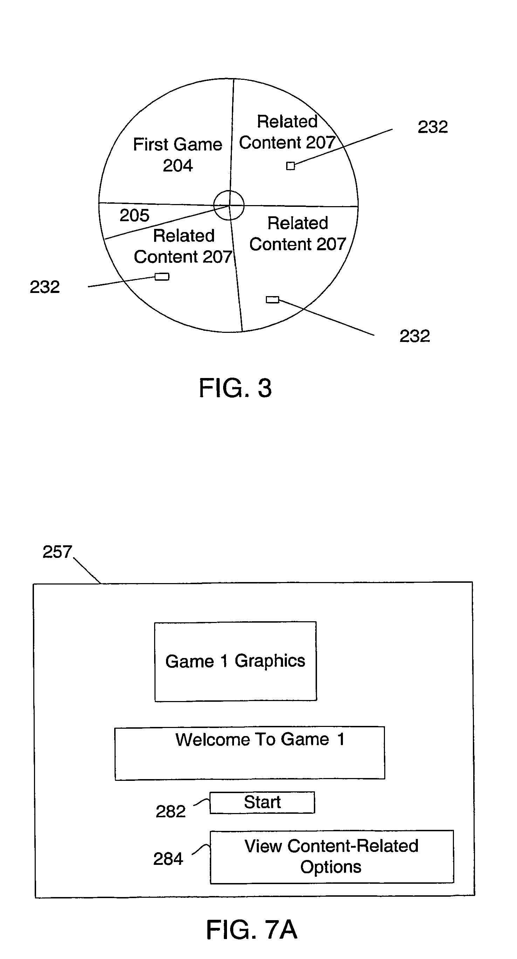

Figure 2A shows a blank disc medium 202, before data and instructions for a game or related content has been recorded thereon. Figure 2B shows a first embodiment of a computer program video game product 200. As shown, game data and instructions for a first game 204 is stored on the disc medium 202. It is to be understood that the pictorial illustrations of Figures 2B, 2C, 2D and 3 only illustrate what data is stored thereon. Thus, these figures are not intended to represent the manner in which such data is stored. Rather, normal data sectors and normal data accesses are used, such as by an optical disc drive, for example.

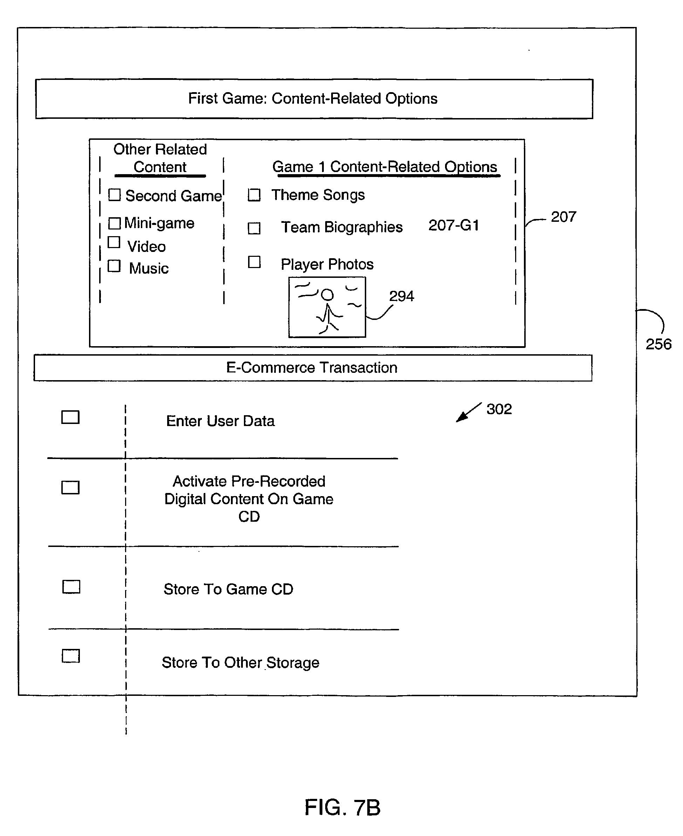

Still referring to Figure 2B, the stored first game 204 is the main game for which the product 200 was purchased. In one embodiment, additional content data 205 is provided on the product 200. The additional content data 205 is the code that will enable the presentation of related content options to a user during, before or after playing the main game 204. As shown in Figure 7B, the additional content data 205 is what will enable the display of the content related options 207. In one embodiment, the additional content data 205 will simply be an Internet link to related content or will be the actual related content. As mentioned above, if the actual related content is stored on the medium 202, that content will have to be enabled.

The enabling may be, for example, by logging into a commercial website to purchase a key to unlock the related content. Alternatively, the user will be able to download the related content and write it directly to the disc that contains the first game 204. To download the content, the user will be prompted to complete an e-commerce transaction. In one embodiment, the additional content data 205 will include short samples of the related content. Such samples will allow a user to determine whether her/she actually wants to purchase a full version of the related content. Although the additional content data 205 is shown as a separate segment of data on the medium 202, it should be appreciated that he additional content data 205 can well be part of the first game 204. Accordingly, the inclusion of a separate segment for 205 in Figure 2C, 2D and 3 is only to emphasize that the medium 202 will include code for presenting additional related media options to users of the first video game 204.

Figure 2B also shows a portion 210 of unused bandwidth sufficient for storing data for the additional related content, if purchased by the user. Figure 2C illustrates the recording of a second game 208 in the portion 210. In an alternate embodiment, the second game 208 may have already been recorded on the medium 202, and unlocking is the only step needed to activate the second game (if a key is purchased, for example).

The term "unused bandwidth", as used herein indicates that when a user of the first game 204 purchases the computer program video game product 200, the portion 210 provides space for other data to be recorded thereon. As a result, the portion 210 is "unused" and available to receive, and store or record, data and instructions corresponding to any content-related option 207 that is to be included on the product 200. In this regard, it may be understood that a standard "blank" DVD medium 202has data and instruction storage capacity of about 4.3Gb. A typical video game such as the first game 204, may only take up one third to half the available bandwidth. If an option 207 is a second game 208, then the portion 210 is also available (i.e., if sufficient) for storage of the data and instructions for the second game 208. If the portion 210 is not sufficiently large for the second game 208, the user will be advised through a text or message.

In one embodiment, the options 207 provided to the user will be pre-screened on-the-fly to determine if they fit on the portion 210. For instance, after the user stores the second game 208 on the unused portion 210, the portion 210 will be smaller and thus not capable of storing some games or related options. Upon storing new data to the portion 210, the code in 205 will determine the available space and only display as options 207 that data that can fit in the remaining portion 210. In this manner, the user is not provided with options that are not capable of fitting on the medium 202. Still further, if certain options do not fit on the medium 202, the options will still be provided. However, the options will also provide the user with some indication that the content will have to be stored on another storage device, other than the medium 202 (e.g., on a hard drive, memory stick, etc.).

Figure 2D shows an embodiment in accordance with the present invention, where the portion 210 is pre-recorded with content related options. In this example, the product 200 comes with a mini-game, a song or songs, a movie, and free space. If the product 200 comes with this pre-recoded related content, the user can activate that content by going to an appropriate e-commerce website. In combination with this embodiment, the user can also use the free space to add other content related options 207 (see Figure 7B), if space is available.

Figure 3 illustrates a first video game 204 having additional content data 205, and three other related content 207 portions. Each related content option is preferably locked at the time of purchase of the first game 204. For instance, the first game might be a football game, and the other three related options might be basketball, hockey, and baseball. It is very likely that the purchaser of the football game might have an interest in one or more of the other three options. To avoid extra trips to the store, the user can simply link to an e-commerce website (i.e., as assisted by the additional content data 205 code) and activate the additional games. The related content 207 is, as mentioned above, locked by a suitable encryption key 232. The encryption key 232 can be opened using a suitable decryption key. The decryption key is what is purchased during the e-commerce transaction.

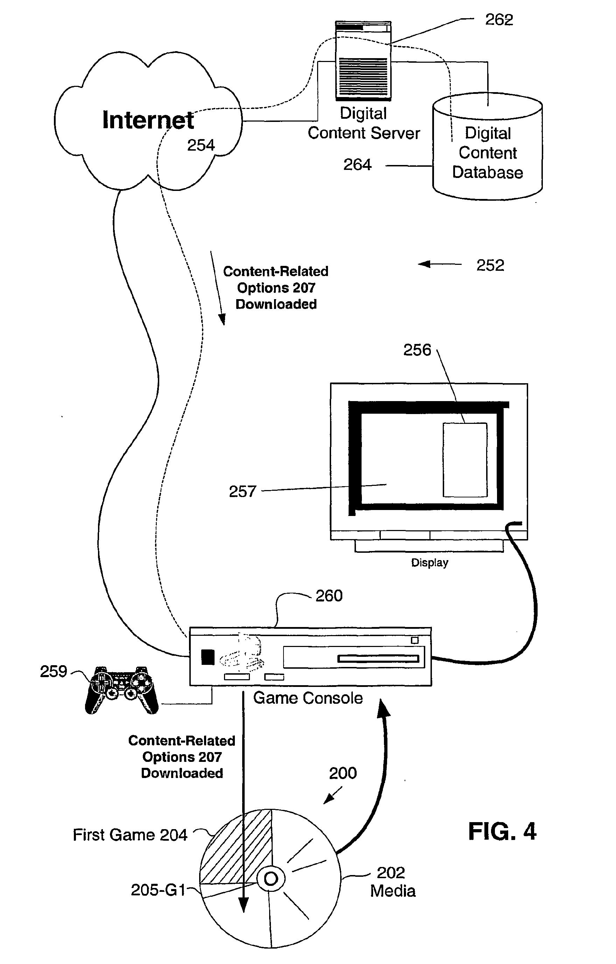

Figure 4 shows an embodiment of the interactive content system 252 in accordance with the present invention. The system shows a digital content server 262 that is coupled to a digital content database 264. The game console 260 is shown connected to the digital content server 262 through the Internet 254, using any wired or wireless connection. The digital content server may, in one embodiment, be one or more servers that provide access to digital content. The options 207, in one embodiment, may actually be stored on the digital content database 264. In this manner, the options 207 can be presented to the user in real-time, and can be updated at any time. For instance, if the first video game 204 is Madden 2000, the options 207 that are stored on the digital content database would be updated to include other games, such as Madden 2001, Madden 2002, and Madden 2003, for example. The additional content data 205, in this example, would simply be a link to the digital content server 262. The digital content server 262 would then data mine the digital content database 264 to then provide updated options 207 to the user.

In either embodiment, once the digital content is selected by the user, the user is prompted to complete an e-commerce transaction. Once the transaction is complete and approved, the content related option(s) 207 are downloaded to the game console 260. The game console 260, using optical writing code will bum the purchased content onto the media 202. Optical writing code is well known to those skilled in the art. In the example of Figure 4, the purchased option may be a second game 208 as shown in Figure 2C.

In one embodiment, the user of the game console can simply use the game controller 259 to navigate the options or Internet during the e-commerce transaction. In still another embodiment, a user can be linked to a website and pointed to related content that can be purchased (e.g., such additional games). The additional games can then be downloaded to the optical media 202 at that time, or the downloading can be done at a later time. Purchased digital media can be temporarily stored at a site or address for later retrieval and recording.

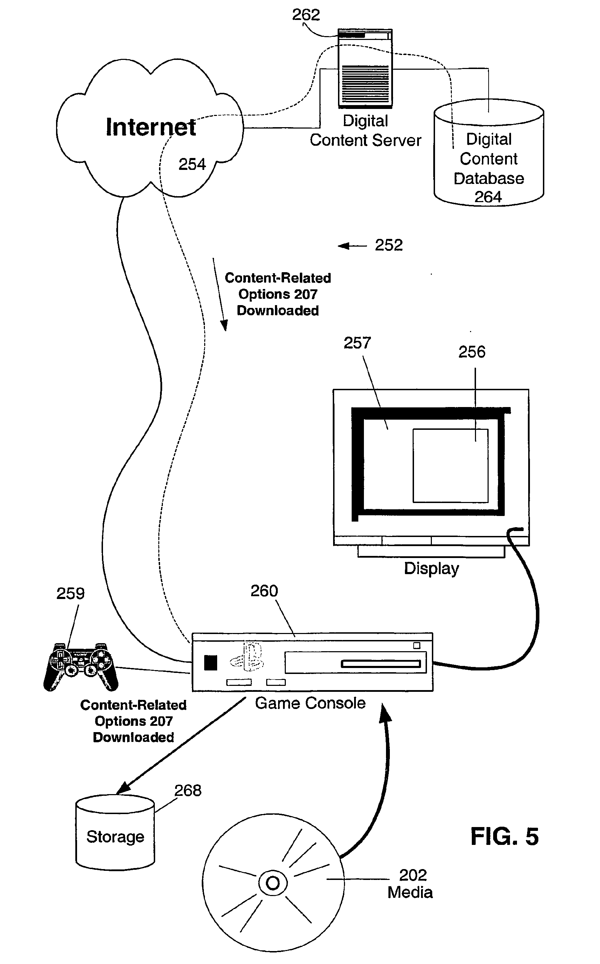

Figure 5 shows another embodiment of the interactive content system 252 in accordance with the present invention. A reference number shown in Figure 4 refer to the same item. Figure 5 shows an alternate storage device 268, such as a separate disk drive, that may be used for storing data and instructions downloaded from the Internet 254, for example. By making an e-commerce transaction facilitated in the same manner as described above with respect to Figure 4, a second game 208, or other content-related options 207 may be downloaded to the storage device 268, rather than onto media 202. The downloading onto the storage device 268 may be also facilitated by use of an interactive option menu 256 on the screen 257 connected to the video game console 260 of the system 252. Through the controller 259, the option menu 256 may be navigated.

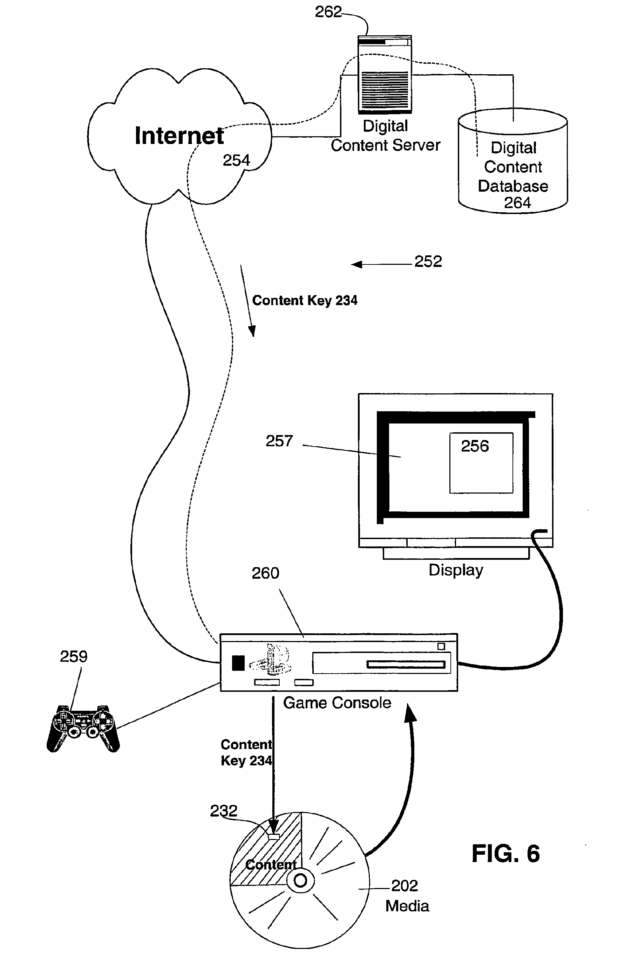

Figure 6 shows another embodiment of the interactive content system 252 in accordance with the present invention. A reference number shown in both Figures 4 and 5 refer to the same item. In this example, the medium 202 in Figure 6 includes only one game, which is currently locked. In this embodiment, a user may obtain the media 202 for free, as an insert to a magazine or through the mail. The media 202 will include basic code 205 to prompt the user to an e-commerce website to enable the purchase of a content key 234. As shown, once the media 202 is inserted into the game console 260, the user will be prompted through a guided menu to enable purchase of the content key 234. The content key 234, as shown, can be downloaded from a digital content database 264 over the Internet 254. The content key 234 will then unlock the encryption key 232 that locks the content on the media 202.

Figure 7A shows an example of a screen 257, in accordance with one embodiment of the present invention. The screen 257 may be presented to the user upon inserting a game compact disc. The screen 257 is shown to be generic, however, one skilled in the art will understand that a typical screen will have well defined graphics, animation, and accompanying music and sounds. For purposes of discussion only, the user may have purchased a football game, and the graphics for Game 1, may be a football helmet that rotates. As is typical in video games, the user will be prompted to start the game by selecting an icon 282 or pushing a button on the controller. Selecting the icon 282 will either start the game immediately or move the user to another screen where other selections regarding the game skill level, environment, duration, etc., may be selected.

As part of the usual set up, the user may be provide with an option to jump to another screen where content related options are provided. As mentioned above, the content related options 207 are essentially digital content that can be purchased or sampled. The digital content, in a preferred embodiment will have some relation to the first game 204 (i.e., the main game product 200).

In another embodiment, the user can return to the main screen 257 and select to view content related options by selecting icon 284. The selection of icon 284 will move the user to a screen or sets of screens that will enable selection of particular content related options. Figure 7B illustrates an example where a first game provides certain related options 207. For instance, the game related options may be content that relates directly to the game 1, such as options 207-G1. These options that related directly to game 1 may, for instance, enhance the game 1 itself. In the example provide herein, the user may choose to add special theme songs to the game play. For example, if a user gets excited when listening to Elvis music, the user may want to incorporate Elvis songs into the game 1 play. If game 1 is a football game, the user may want to obtain team biographies of the players for the current year, or current player photos. Before these game enhancements are purchased, the user is provided with the option of viewing sort video samples in sub-screen 294, or listen to short clips of songs.

In another embodiment, the options 207 may be other related content. Other related content may be, for example, a second game, a mini-game, a video, or music. Thus, other related content will not enhance the first game, but will provide additional digital content that can be downloaded or activated. Once the user makes its selections, the user will be prompted to complete an e-commerce transaction. The e-commerce transaction may include options 302. Options 302 request the entering of user data, activate pre-recorded digital content on a game CD, store new content to the game CD, or store digital content to other storage.

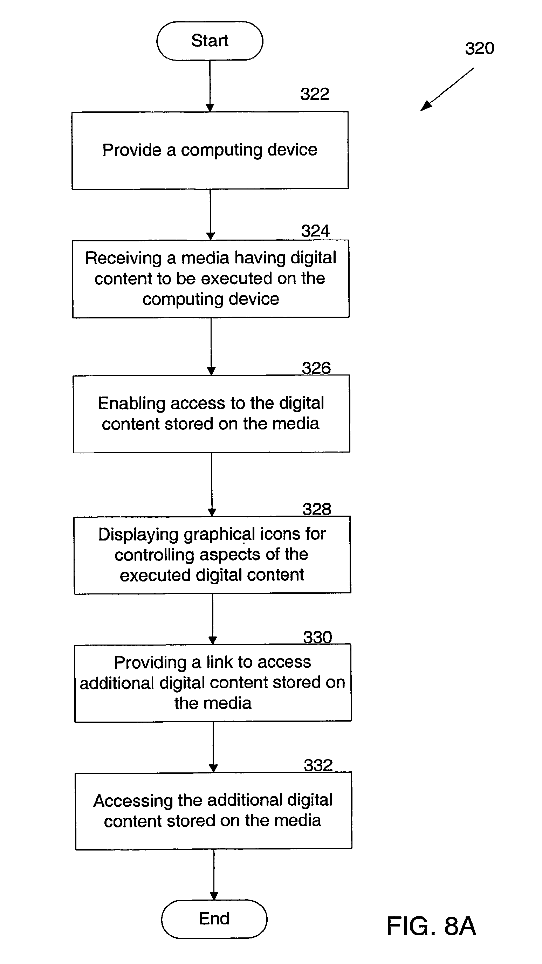

Figure 8A shows a flowchart 320 defining method operations performed when additional digital content stored on a compact disc media is enabled through an

e-commerce transaction, in accordance with one embodiment of the present invention. The method begins at operation 322 where a computer device is provided. The computer device, as described above, may be a game console that is designed to play video games. The video games are typically stored on a compact disc, and the compact disc is inserted into the game console computing device where instructions stored on the compact disc are executed. When the computer instructions are executed, the user may interact with the video game whether it be during setup operations or during actual play.

The method now moves to operation 324 where a media having digital content to be executed on the computer device is received. As mentioned above, the media may be a compact disc or other device having digital content that is to be received and executed by the computing device. The method then moves to operation 326 where access to the digital content stored on the media is enabled. Access to the digital content stored on the media is provided by loading the compact disc and executing the program instructions. Enabling access to the digital content stored on the media may also be in the form of providing interactive access to the video game or setup screens provided by the particular game.

The method now moves to operation 328 where graphical icons for controlling aspects of the executed digital content is displayed. The graphical icons may be in the form of graphics, animation, and action that may be part of the game. In addition to displaying graphical icons, the user may be provided with options to select menus either before play, during play, or after play. The method now moves to operation 330 where a link is provided to access additional digital content stored on the media. In this embodiment, the compact disc that holds the main game may also include other digital content that may be related to the main game.

Although the user may not have purchased the game to obtain the additional content, the additional content may be of interest to the user because it relates to the game that the user purchased. As mentioned above, if the user purchased a football game, the additional digital content stored on the media may be a basketball game. For the user, having access to this additional digital content that may already be stored on the compact disc is beneficial for many reasons. For example, the user will find it more efficient to simply activate the additional digital content stored on the same compact disc instead of having to make a special trip to the store to purchase the game. Additionally, the producer of the video game may provide the game at discount to the user compared to purchasing the game separately in its own case at the store. The discount may be warranted since the manufacturer or designer of the video game will not have to invest in packaging, shipping, and display shelf time in stores.

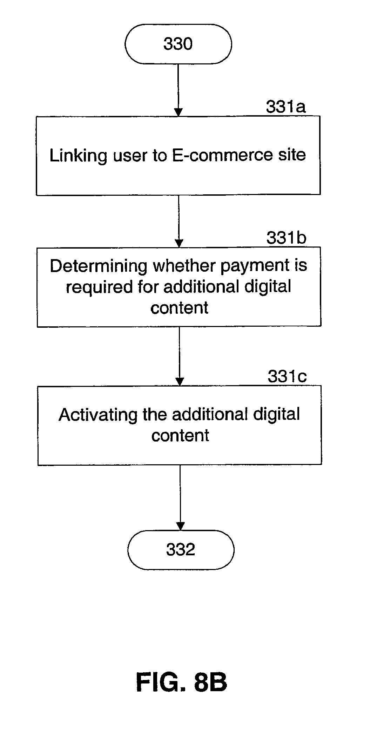

The method then moves to operation 332 where the additional digital content stored on the media is accessed. Accessing the additional digital content stored on the media may be facilitated, as shown in Figure 8B.

Figure 8B illustrates a flowchart where the link provided in operation 330 moves to operation 331a. In operation 331a, the user will be provided with a link to an e-commerce site. The e-commerce site may be the site of a game manufacturer, or a third party that produces some digital content. Once the user is linked to an e-commerce site, the method moves to operation 331b where it is determined whether payment is required for the additional digital content.

In some embodiments, the additional digital content may be a mini-game that has restricted access to particular features. In such a case, the mini-game may be provided for free and the e-commerce site will not require payment from the user. However, the user would still, in one embodiment, be required to sign up at the e-commerce site so the producer of the mini-game will know the identify of the person that downloaded the sample mini-game product. In this manner, the manufacturer can then follow-up with the user to determine whether the user wants to purchase the full game at a later time. The method now moves to an operation 331c where the additional digital content is activated to allow the user to fully access the digital content in operation 332 of Figure 8A.

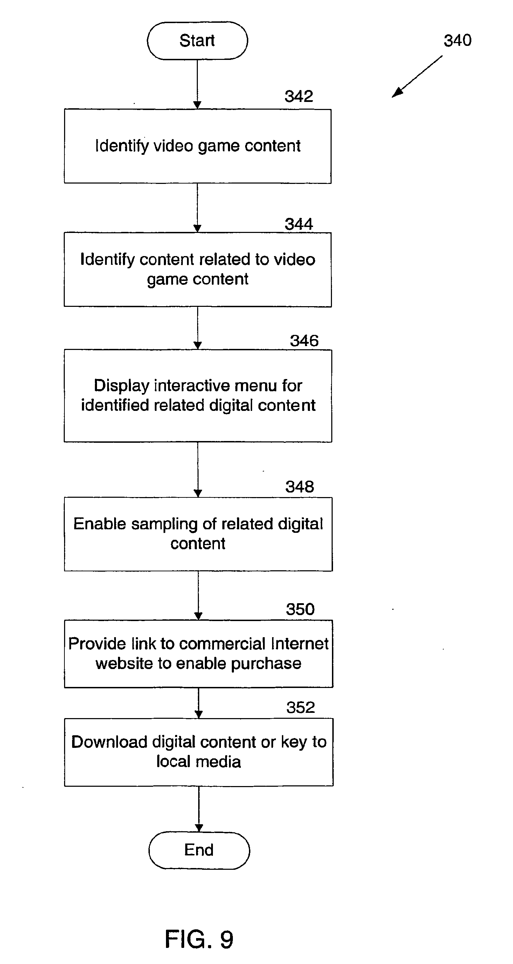

Figure 9 illustrates a flowchart 340 where the user is provided with the option of obtaining additional related content, and then storing the additional related content to a local media. The method begins at operation 342 where video game content is identified. In one embodiment, the video game content that is identified is the first game that was purchased with the compact disc. The method then moves to operation 344 where content related to the video game content is identified.

The content related to the video game may be resident on the compact disc itself in identification section 205, or may be dynamically provided to the user from the Internet. In either case, the content related to the video game will need to be identified and presented to the user. The method now moves to operation 346 where an interactive menu for the identified related digital content is displayed to the user. As mentioned above, the interactive menu may be provided at the beginning of the video game play, during video game play, or after video game play. In either embodiment, the user is provided with the interactive menu so that selection of particular related digital content can be identified for purchase.

The method now moves to operation 348 where sampling of the related digital content that may have been selected in operation 346 is enabled. The sampling may be in the form of providing mini-games, sample music clips, sample video clips, or other samples to enable evaluation of the additional digital content to be purchase. In an alternative embodiment, the samples do not have to be provided, and the user will simply be required to purchase the digital content selected in operation 346.

The method now moves to operation 350 where a link to the commercial Internet web site is provided to enable purchase of the digital content. As mentioned earlier, the commercial Internet web site may be the web site for the same company that produced the video game, or other companies that may want to promote video games or mini-games to the user of a particular game. Once the user completes the e-commerce transaction in operation 350, the method moves to operation 352 where the digital content or key to unlock the digital content is downloaded to the local media from the Internet.

As mentioned above, the digital content itself may be downloaded or, in the alternative, a simple decryption key may be downloaded to unlock content that may already reside on the compact disc. Once downloaded, the user can then access the digital content stored on the local media (compact disc, hard disc, or other storage). In one embodiment, the additional digital content that was either downloaded or activated will be secured or encrypted to prevent additional unauthorized reproduction.

Although the foregoing invention has been described in some detail for purposes of clarity of understanding, it will be apparent that certain changes and modifications may be practiced within the scope of the appended claims. For instance, related digital content can be any data, so long as the data can be stored in digital form. The relation, in the broadest terms, can be any relation, so long as some logical or marketing link can be made. Accordingly, the present embodiments are to be considered as illustrative and not restrictive, and the invention is not to be limited to the details given herein, but may be modified within the scope and equivalents of the appended claims.

## Claims

1. A method of operating a video game console (260) to provide options for downloading or activating additional digital content (207) related to the content of a video game, comprising the operations of:
identifying additional digital content (207) related to the content of a video game (204);
displaying an interactive menu (256) on a screen coupled to the video game console before, during, or after the video game, the interactive menu itemizing selectable additional digital content (207) related to the content of the video game;
enabling a user to obtain or activate selected additional digital content by providing a link over the Internet to an e-commerce website; and
after completion of an e-commerce transaction, providing access to the selected additional digital content by downloading either the selected additional digital content or a key (234) to unlock the selected additional digital content.

2. A method as recited in claim 1, further comprising:
providing a sample of selected additional digital content from the interactive menu.

3. A method as recited in claim 1 or 2, wherein the selected additional digital content is one of a game, a movie, a song, and a video.

4. A method as recited in any preceding claim, wherein the selected additional digital content is stored in a local storage device in an encrypted format.

5. A method as recited in claim 4, wherein the encrypted format prevents copying of the additional digital content to an alternative storage device.

6. A method as recited in any preceding claim, wherein the interactive menu is selectable through a user input device (259).

7. A method as recited in any preceding claim, wherein the digital data for the video game and the additional digital content are stored on the same medium.

8. A method as recited in claim 7, wherein the same medium is a compact disc.

9. A method as recited in claim 7, wherein the displayed options for additional digital content are stored on the same medium.

10. A computer video game product comprising a computer-readable medium having program instructions and data, the program instructions being operable to implement the method of any preceding claim.

11. A system for providing options for downloading or activating additional digital content (207) related to the content of a video game, the system comprising:
a computer-readable medium having recorded thereon computer-readable video game content instructions and data and code identifying additional digital content (207) related to the content of a video game (204); and
a video game computer console (260) capable of reading the instructions and data, the video game computer console being configured to:
display an interactive menu (256) on a screen coupled to the video game console before, during, or after the video game, the interactive menu itemizing selectable additional digital content (207) related to the content of the video game;
provide a link over the Internet (254) to an e-commerce website to enable a user to obtain or activate selected additional digital content; and
provide after completion of an e-commerce transaction access to the selected additional digital content by downloading either the selected additional content or a key (234) to unlock the selected additional content.

12. A system as recited in claim 11, wherein the computer-readable medium further comprises:
unused bandwidth sufficient for storing the selected additional digital content to enable the computer console to process the selected additional digital content and the video game.

## Patentansprüche

1. Verfahren zum Betreiben einer Videospielkonsole (260), um Optionen zum Herunterladen oder Aktivieren von zusätzlichem digitalem Inhalt (207), der sich auf den Inhalt eines Videospiels bezieht, zur Verfügung zu stellen, mit den folgenden Arbeitsschritten:
Identifizieren des zusätzlichen digitalen Inhalts (207), der sich auf den Inhalt eines Videospiels (204) bezieht;
Anzeigen eines interaktiven Menüs (256) auf einem Bildschirm, der zuvor, während oder nach dem Videospiel mit der Videospielkonsole verbunden wurde, wobei das interaktive Menü auswählbaren zusätzlichen digitalen Inhalt (207), der sich auf den Inhalt des Videospiels bezieht, einzeln aufführt;
Ermöglichen eines Benutzers, den ausgewählten zusätzlichen digitalen Inhalt zu erhalten oder zu aktivieren, indem eine Verbindung über das Internet zu einer e-commerce-Website bereitgestellt wird; und
nach dem Abschluss einer e-commerce-Transaktion Bereitstellen eines Zugangs zu dem ausgewählten zusätzlichen digitalen Inhalt, indem entweder der ausgewählte zusätzliche digitale Inhalt oder ein Schlüssel (234) herunter geladen wird, um den ausgewählten zusätzlichen digitalen Inhalt zu entsperren.

2. Verfahren nach Anspruch 1 mit dem weiteren Schritt:
Bereitstellen eines Samples des ausgewählten zusätzlichen digitalen Inhalts aus dem interaktiven Menü.

3. Verfahren nach Anspruch 1 oder 2, wobei der ausgewählte zusätzliche digitale Inhalt einem Spiel, einem Film, einem Lied oder einem Video entspricht.

4. Verfahren nach einem der vorangehenden Ansprüche, wobei der ausgewählte zusätzliche digitale Inhalt in einer lokalen Speichervorrichtung in einem verschlüsselten Format gespeichert wird.

5. Verfahren nach Anspruch 4, wobei das verschlüsselte Format das Kopieren des zusätzlichen digitalen Inhalts auf eine alternative Speichervorrichtung verhindert.

6. Verfahren nach einem der vorangehenden Ansprüche, wobei das interaktive Menü über eine Benutzereingabevorrichtung (259) auswählbar ist.

7. Verfahren nach einem der vorangehenden Ansprüche, wobei die digitalen Daten für das Videospiel und der zusätzliche digitale Inhalt auf demselben Medium gespeichert werden.

8. Verfahren nach Anspruch 7, wobei dasselbe Medium einer Compactdisc entspricht.

9. Verfahren nach Anspruch 7, wobei die angezeigten Optionen für den zusätzlichen digitalen Inhalt auf demselben Medium gespeichert werden.

10. Computervideospielprodukt, das ein computerlesbares Medium mit Programmbefehlen und Daten umfasst, wobei die Programmbefehle geeignet sind, um das Verfahren gemäß einem der vorangehenden Ansprüche zu implementieren.

11. System zum Bereitstellen von Optionen zum Herunterladen oder Aktivieren von zusätzlichem digitalem Inhalt (207), der sich auf den Inhalt eines Videospiels bezieht, wobei das System umfasst:
ein computerlesbares Medium mit darauf aufgezeichneten computerlesbaren Videospielinhalt und Befehlen und Daten und einen Code, der den zusätzlichen digitalen Inhalt (207), der sich auf den Inhalt eines Videospiels (204) bezieht, identifiziert; und
eine Videospiel-Computerkonsole (260), die ausgebildet ist, um die Befehle und Daten auszulesen, wobei die Videospiel-Computerkonsole ausgestaltet ist, um:
ein interaktives Menü (256) auf einem Bildschirm, der mit der Videospielkonsole vor, während oder nach dem Videospiel verbunden wird, anzuzeigen, wobei das interaktive Menü auswählbaren zusätzlichen digitalen Inhalt (207), der sich auf den Inhalt des Videospiels bezieht, einzeln aufführt;
eine Verbindung über das Internet (254) zu einer e-Commerce-Website zur Verfügung zu stellen, um einem Benutzer zu ermöglichen, ausgewählten zusätzlichen digitalen Inhalt zu erhalten oder zu aktivieren; und
um nach einem Abschluss einer e-Commerce-Transaktion Zugang zu dem ausgewählten zusätzlichen digitalen Inhalt bereitzustellen, indem entweder der ausgewählte zusätzliche Inhalt oder ein Schlüssel (234) zum Entsperren des ausgewählten zusätzlichen Inhalts herunter geladen wird.

12. System nach Anspruch 11, wobei das computerlesbare Medium weiterhin umfasst:
nicht verwendete Bandbreite, die ausreicht, um den ausgewählten zusätzlichen digitalen Inhalt zu speichern, um zu ermöglichen, dass die Computerkonsole den ausgewählten zusätzlichen digitalen Inhalt und das Videospiel verarbeitet.

## Revendications

1. Procédé d'exploitation d'une console de jeu vidéo (260) pour fournir des options pour télécharger ou activer un contenu numérique additionnel (207) lié au contenu d'un jeu vidéo, comprenant les opérations consistant à :
identifier un contenu numérique additionnel (207) lié au contenu d'un jeu vidéo (204) ;
afficher un menu interactif (256) sur un écran couplé à la console de jeu vidéo avant, pendant, ou après le jeu vidéo, le menu interactif détaillant le contenu numérique additionnel sélectionnable (207) lié au contenu du jeu vidéo ;
permettre à un utilisateur d'obtenir ou d'activer le contenu numérique additionnel sélectionné en fournissant un lien sur Internet à un site Web de commerce électronique ; et
après l'achèvement d'une transaction de commerce électronique, fournir l'accès au contenu numérique additionnel sélectionné en téléchargeant soit le contenu numérique additionnel sélectionné soit une clé (234) pour déverrouiller le contenu numérique additionnel sélectionné.

2. Procédé selon la revendication 1, comprenant en outre :
la fourniture d'un échantillon du contenu numérique additionnel sélectionné depuis le menu interactif.

3. Procédé selon la revendication 1 ou 2, dans lequel le contenu numérique additionnel sélectionné est un parmi un jeu, un film, une chanson, et une vidéo.

4. Procédé selon l'une quelconque des revendications précédentes, dans lequel le contenu numérique additionnel sélectionné est stocké dans un dispositif de stockage local dans un format chiffré.

5. Procédé selon la revendication 4, dans lequel le format chiffré empêche la copie du contenu numérique additionnel vers un dispositif de stockage alternatif.

6. Procédé selon l'une quelconque des revendications précédentes, dans lequel le menu interactif est sélectionnable par l'intermédiaire d'un dispositif d'entrée d'utilisateur (259).

7. Procédé selon l'une quelconque des revendications précédentes, dans lequel les données numériques pour le jeu vidéo et le contenu numérique additionnel sont stockés sur le même support.

8. Procédé selon la revendication 7, dans lequel le même support est un disque compact.

9. Procédé selon la revendication 7, dans lequel les options affichées pour le contenu numérique additionnel sont stockées sur le même support.

10. Produit de jeu vidéo informatique comprenant un support lisible par ordinateur ayant des instructions de programme et des données, les instructions de programme étant exploitables pour mettre en oeuvre le procédé de l'une quelconque des revendications précédentes.

11. Système pour fournir des options pour télécharger ou activer un contenu numérique additionnel (207) lié au contenu d'un jeu vidéo, le système comprenant :
un support lisible par ordinateur ayant enregistrés dessus des instructions de contenu de jeu vidéo lisibles par ordinateur et des données et un code identifiant un contenu numérique additionnel (207) lié au contenu d'un jeu vidéo (204) ; et
une console informatique de jeu vidéo (260) capable de lire les instructions et les données, la console informatique de jeu vidéo étant configurée pour :
afficher un menu interactif (256) sur un écran couplé à la console de jeu vidéo avant, pendant, ou après le jeu vidéo, le menu interactif détaillant le contenu numérique additionnel sélectionnable (207) lié au contenu du jeu vidéo ;
fournir un lien sur Internet (254) à un site Web de commerce électronique pour permettre à un utilisateur d'obtenir ou d'activer le contenu numérique additionnel sélectionné ; et
fournir, après l'achèvement d'une transaction de commerce électronique, l'accès au contenu numérique additionnel sélectionné en téléchargeant soit le contenu additionnel sélectionné soit une clé (234) pour déverrouiller le contenu additionnel sélectionné.

12. Système selon la revendication 11, dans lequel le support lisible par ordinateur comprend en outre :
une largeur de bande non utilisée suffisante pour stocker le contenu numérique additionnel sélectionné pour permettre à la console informatique de traiter le contenu numérique additionnel sélectionné et le jeu vidéo.
